# DEMANDE DE BREVET EUROPEEN

(11) **EP 1 972 867 A1**
(43) Date de publication de la demande: **24.09.2008**
(21) Numéro de dépôt: 08005319.2
(22) Date de dépôt: 20.03.2008
(51) Int. Cl.: F24H 9/12, F16K 3/24, F16L 55/105, F16L 55/11

(54) **Raccord destiné à raccorder un tube avec une nourrice**

(30) Priorité: 22.03.2007 FR 0702108
(71) Demandeur: Elyssa, 72000 Le Mans (FR)
(72) Inventeur: Constans, Yann, 72650 La Milesse (FR)
(74) Mandataire: Maillet, Alain

(57) **Abrégé**

La présente invention concerne un raccord (100) destiné à raccorder un tube (T) avec une nourrice (N), le raccord étant du type comprenant un corps (200, 200') de raccord incluant un premier passage (230) destiné à être raccordé avec le tube (T), un second passage (250) destiné à être raccordé avec la nourrice (N).

Selon l'invention, le corps (200, 200') de raccord incorpore uw logement cylindrique (210) à l'intérieur duquel est logé un obturateur (300) apte à obturer un siège (270) interposé entre le premier passage (230) et le second passage (250).

Par cette construction, le raccord intègre un obturateur qui permet de couper l'écoulement de fluide ou de régler le débit de l'écoulement de fluide entre le tube et la nourrice ou réciproquement.

## Description

La présente invention concerne un raccord destiné à raccorder une nourrice à un tube hydraulique.

Ce raccord convient pour raccorder une nourrice à un tube hydraulique pour la distribution d'un fluide caloporteur ou bien encore pour raccorder une nourrice à un tube hydraulique de distribution d'eau sanitaire.

Pour raccorder des éléments chauffants hydrauliques, tels que des radiateurs ou un plancher chauffant, il est avantageux d'utiliser des nourrices permettant de regrouper en un lieu tous les principaux branchements d'une installation de chauffage, pour simplifier sa pose et son réglage. On distingue typiquement une nourrice de distribution de l'eau chauffée vers les éléments chauffants ainsi qu'une nourrice de collecte de l'eau provenant de ces éléments chauffants.

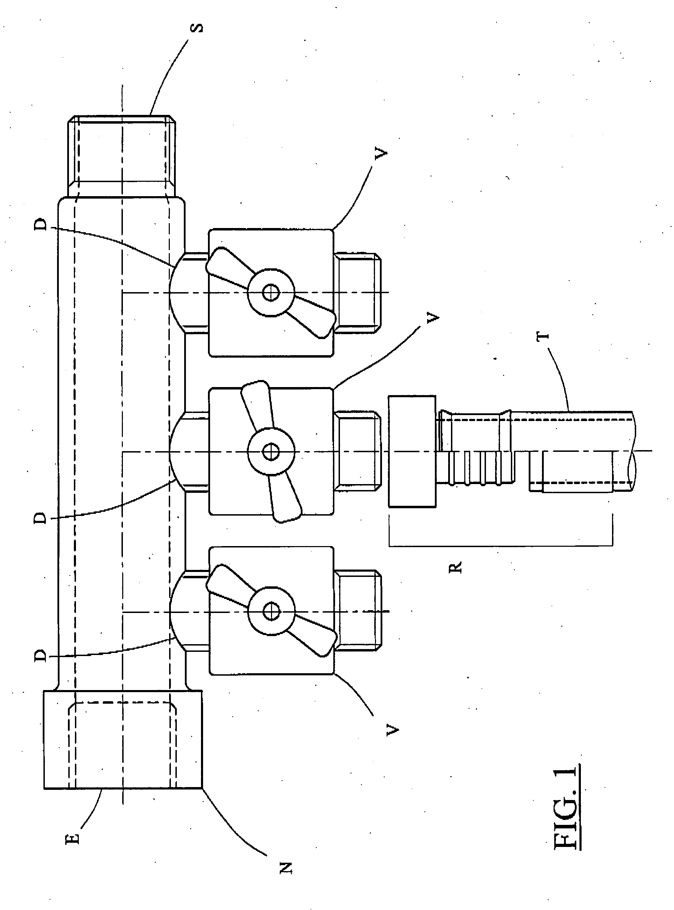

Une telle nourrice N est représentée à la Fig. 1. Elle est pourvue de deux orifices de raccordement principaux, un orifice de raccordement d'entrée E du fluide et un orifice de raccordement de sortie S du fluide. La nourrice est encore pourvue d'une pluralité d'orifices de raccordement secondaires D pour le raccordement de tubes T hydrauliques destinés à transporter un fluide caloporteur, typiquement de l'eau additionnée d'un adjuvent. Un seul tube T est montré sur cette Fig. 1. Chaque tube T est raccordé à la nourrice N par l'intermédiaire d'un raccord R.

Pour faciliter la maintenance et/ou le réglage de l'installation de chauffage, l'installateur interpose le plus souvent une vanne V entre la nourrice N et le raccord R. Cela permet d'isoler un élément chauffant ou un groupe d'éléments chauffants, par exemple, pour le remplacer. Cela permet aussi de régler le débit de chaque élément chauffant ou de chaque groupe pour équilibrer l'installation.

L'inventeur a souhaité simplifier cette construction assez onéreuse en matériel et relativement longue à monter en proposant un raccord destiné à raccorder une nourrice à un tube hydraulique qui permette également de régler ou d'interrompre le débit et qui soit peu onéreux à fabriquer et facile à installer.

A cet effet, est proposé un raccord destiné à raccorder un tube avec une nourrice, le raccord étant du type comprenant un corps de raccord incluant un premier passage destiné à être raccordé avec le tube, un second passage destiné à être raccordé avec la nourrice. Selon l'invention, le corps de raccord incorpore un logement cylindrique à l'intérieur duquel est logé un obturateur apte à obturer un siège interposé entre le premier passage et le second passage.

Par cette construction, le raccord de l'invention intègre un obturateur qui permet de couper l'écoulement de fluide ou de régler le débit de l'écoulement de fluide entre le tube et la nourrice ou réciproquement.

Selon une caractéristique additionnelle de l'invention, le premier passage est disposé dans le prolongement du logement cylindrique et le second passage débouche perpendiculairement dans le logement, le siège étant constitué par le débouché du premier passage dans le logement cylindrique.

Le siège est ainsi constitutif du corps de raccord.

Selon une caractéristique additionnelle de l'invention, l'obturateur est pourvu d'une paroi de fermeture du siège, l'obturateur étant mobile entre une position où la paroi de fermeture obture le siège est une position de dégagement où elle est distante du siège.

Dans la position de fermeture de l'obturateur, l'écoulement du fluide est interrompu entre le premier passage et le second passage. On peut ainsi isoler une seule boucle du circuit pour réaliser une intervention sur les éléments chauffants concernés, sans interrompre la circulation de fluide dans les autres éléments.

Dans la position d'ouverture de l'obturateur, le débit nominal du raccord est conservé.

Dans une position intermédiaire, l'obturateur autorise le réglage du débit de fluide, ce qui permet, en agissant sur l'obturateur de chaque raccord branché sur la nourrice, d'équilibrer les débits des éléments de chauffage qui y sont raccordés.

Selon une caractéristique additionnelle de l'invention, le logement cylindrique comprend une paroi lisse débouchant à l'extérieur du corps de raccord au travers d'un premier orifice de montage de l'obturateur, la paroi lisse étant prolongée dans l'autre direction par un taraudage qui débouche au travers du second passage et en ce que l'obturateur est constitué d'un corps cylindrique pourvu localement d'un filetage adapté à coopérer avec le taraudage pour permettre le déplacement de l'obturateur dans le corps suivant un mouvement hélicoïdal, le filetage étant prolongé d'un côté par une gorge susceptible de recevoir un joint d'étanchéité prévu pour coopérer avec la paroi lisse du corps de raccord afin de procurer une étanchéité entre le logement cylindrique et l'obturateur, le filetage étant prolongé par son autre côté par la paroi de fermeture adaptée à coopérer avec le siège.

Selon une caractéristique additionnelle de l'invention, la paroi de fermeture est constituée d'une paroi conique.

Selon une caractéristique additionnelle de l'invention, le premier passage débouche du corps de raccord par un second orifice, le premier passage étant ceinturé par une enveloppe cylindrique recouverte de bourrelets annulaires adaptés, en coopération avec une coiffe de sertissage à raccorder de manière étanche l'extrémité du tube sur l'enveloppe cylindrique.

On peut de la sorte raccorder efficacement et simplement un tube fabriqué en matière plastique semi-rigide tel qu'un tube fabriqué en polyéthylène réticulé (P.E.R.).

Selon une caractéristique additionnelle de l'invention, le second passage du corps de raccord est pourvu d'un moyen de raccordement avec la nourrice.

Selon une caractéristique additionnelle de l'invention, le moyen de raccordement est constitué d'un filetage ceinturant le second passage.

Selon une caractéristique additionnelle de l'invention, l'obturateur est pourvu d'un moyen d'entraînement pour permettre son déplacement dans le corps de raccord, le moyen d'entraînement étant constitué d'une paroi intérieure hexagonale prolongeant un logement creusant intérieurement le corps cylindrique de l'obturateur.

La manoeuvre de l'obturateur peut se faire à l'aide d'une simple clé hexagonale du commerce.

Selon une caractéristique additionnelle de l'invention, le raccord comprend un bouchon adapté à fermer le premier orifice.

Le bouchon est fixé sur le corps de raccord à l'issue du montage et du réglage de l'obturateur.

Selon une caractéristique additionnelle de l'invention, l'axe du second orifice du corps de raccord est orienté perpendiculairement à l'axe du logement cylindrique.

On obtient ainsi une nourrice dont les tubes qui y sont raccordés peuvent être placés horizontalement, par exemple sur le sol.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en élévation d'une nourrice susceptible d'être raccordée à des tubes hydrauliques par l'intermédiaire de vannes et ceci de manière connue de l'état de la technique,
la Fig. 2 représente une vue en élévation d'une nourrice susceptible d'être raccordée à des raccords faisant l'objet de l'invention,
la Fig. 3 représente une vue en coupe d'un raccord démonté selon l'invention,
la Fig. 4 représente une vue en coupe d'un raccord monté sur une nourrice et sur lequel est raccordé un tube, le raccord étant pourvu d'un obturateur placé dans une position de pleine ouverture selon l'invention,
la Fig. 5 représente une vue en coupe d'un raccord monté selon la Fig. 4 et dont l'obturateur est placé dans une position de réglage de débit selon l'invention,
la Fig. 6 représente une vue en coupe d'un raccord monté selon la Fig. 4 et dont l'obturateur est placé dans une position d'obturation selon l'invention et,
la Fig. 7 représente une vue en coupe d'une variante de réalisation d'un raccord démonté selon l'invention.

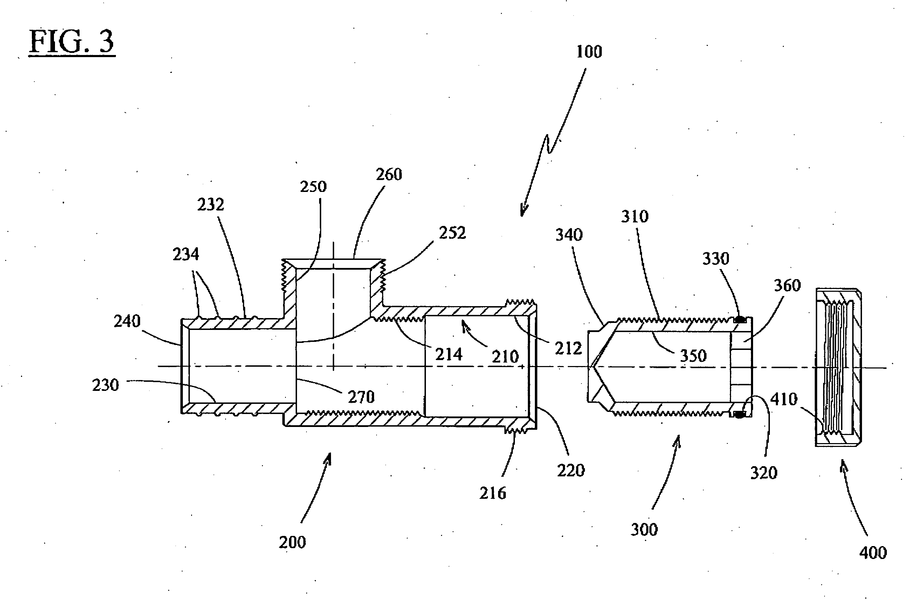

Le raccord 100 présenté à la Fig. 3 est constitué principalement d'un corps 200 de raccord, d'un obturateur 300 et d'un bouchon 400.

Il est destiné à raccorder une nourrice à un tube, comme par exemple dans une installation de chauffage hydraulique en offrant la possibilité de régler ou d'interrompre le débit de fluide circulant dans le tube pour intervenir, par exemple, sur un élément chauffant.

Pour raccorder des éléments chauffants hydrauliques tels qu'un plancher chauffant ou des radiateurs, il est avantageux de les raccorder par l'intermédiaire de nourrices et ceci pour placer en un même lieu les principaux raccordements de l'installation. Les orifices d'admission de ces éléments chauffants sont raccordés par l'intermédiaire de tubes et de raccords à une nourrice de distribution du fluide. Les orifices de sortie de ces éléments sont également raccordés par l'intermédiaire de tubes et de raccords à une nourrice de collecte du fluide de retour.

Le raccord de l'invention est destiné à être monté entre au moins l'une de ces nourrices et chacun des tubes de raccordement aux éléments chauffants.

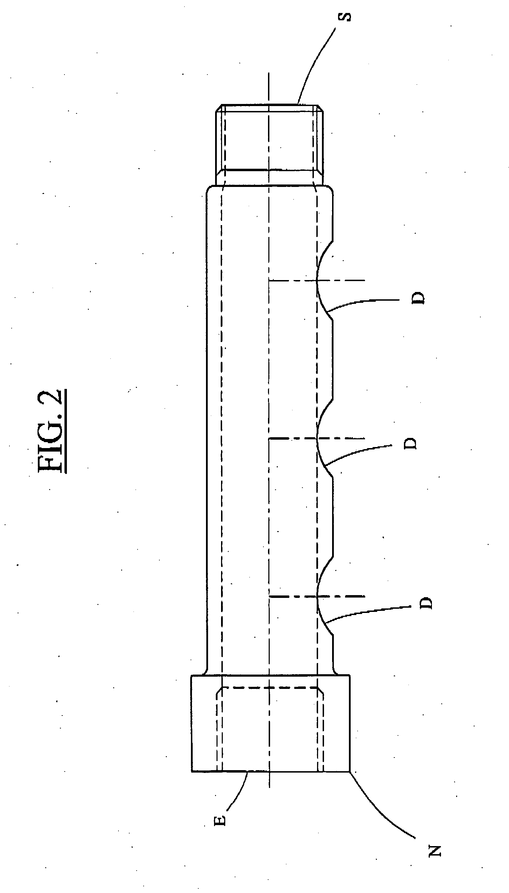

Une telle nourrice N est présentée à la Fig. 2. Elle est du même type que celle montrée à la Fig. 1. Elle est pourvue de deux orifices de raccordement principaux, un orifice de raccordement d'entrée E du fluide et un orifice de raccordement de sortie S du fluide. La nourrice est encore pourvue d'une pluralité d'orifices de raccordement secondaires D pour le raccordement de tubes hydrauliques destinés à transporter un fluide caloporteur, typiquement de l'eau additionnée d'un adjuvent.

Une telle nourrice pourrait aussi convenir à la distribution d'eau sanitaire, chaude ou froide.

A la Fig. 3, le corps 200 de raccord comprend un logement cylindrique 210 destiné à réceptionner l'obturateur 300 de montage de l'obturateur 300 et dont une extrémité débouche, d'un côté du corps 200, par un premier orifice 220, et dont l'autre extrémité débouche dans un premier passage cylindrique 230 débouchant du corps 200 par un second orifice 240 de raccordement vers un tube. Le corps 200 comprend encore un second passage 250 qui débouche d'un bord au travers du logement cylindrique 210 et de manière radiale au niveau de son extrémité interne et qui débouche de son autre bord à l'extérieur du corps 200 au travers d'un troisième orifice 260 de raccordement vers une nourrice.

Le logement cylindrique 210 comprend une paroi lisse 212 débouchant au travers du premier orifice 220 et qui est prolongée dans l'autre direction par un taraudage 214 qui débouche au travers du second passage 250.

On remarquera que la section transversale du premier passage 230 est inférieure à celle du logement 210 si bien que ce premier passage 230 débouche dans ce logement au travers d'un quatrième orifice 270, de section transversale circulaire, et qui forme de la sorte un siège pour l'obturateur 300 entre le premier passage 230 et le second passage 250.

L'obturateur 300 est conçu pour fermer le siège 270 afin d'interrompre l'écoulement de fluide susceptible de circuler entre les deux passages 230 et 250. L'obturateur 300 est constitué pour cela d'un corps cylindrique pourvu extérieurement d'un filetage 310 adapté à coopérer avec le taraudage 214 pour permettre le déplacement de l'obturateur 300 dans le corps 200 suivant un mouvement hélicoïdal. Le filetage 310 s'étend sur la majeure partie du corps cylindrique. Il est cependant prolongé d'un côté par une gorge 320 dans laquelle est monté un joint d'étanchéité 330, tel qu'un joint torique, prévu pour coopérer avec la paroi lisse 210 du corps 200 afin de procurer une étanchéité entre le logement cylindrique 210 et l'obturateur 300. Le filetage 310 est prolongé par son autre côté par une paroi de fermeture 340 du siège 270, telle qu'une paroi conique 340.

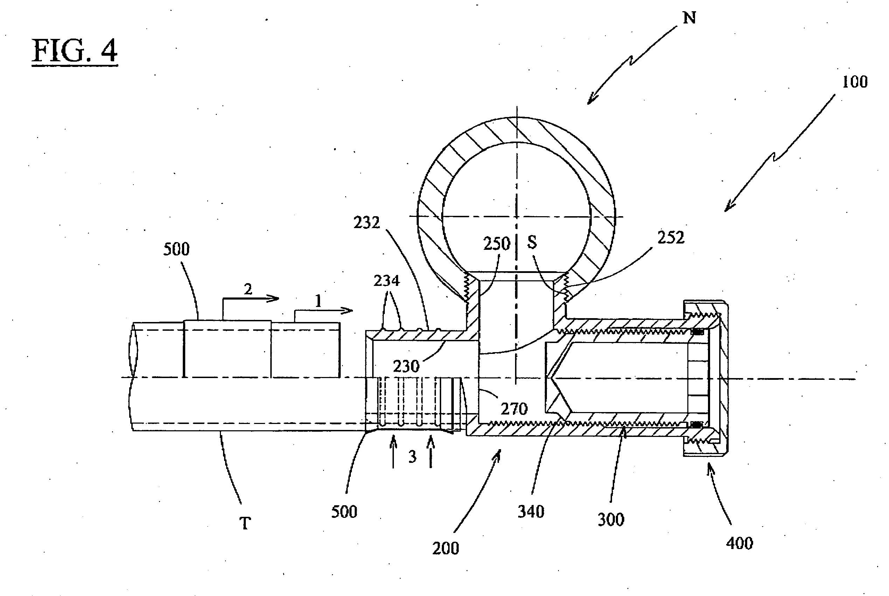

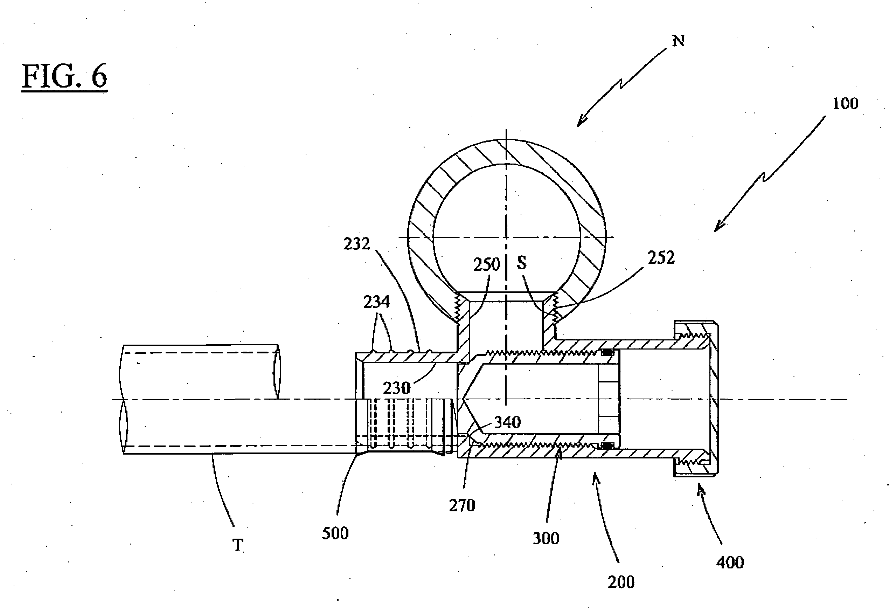

L'obturateur peut de la sorte être déplacé par une opération de vissage/dévissage entre une position de dégagement, visible à la Fig. 4, où il est suffisamment éloigné du siège 270 pour autoriser un débit maximum de fluide entre le premier passage 230 et le second passage 250 et une position de fermeture, visible à la Fig. 6, où la paroi conique 340 obture le siège 270, coupant de la sorte tout écoulement de fluide entre les deux passages 230 et 250.

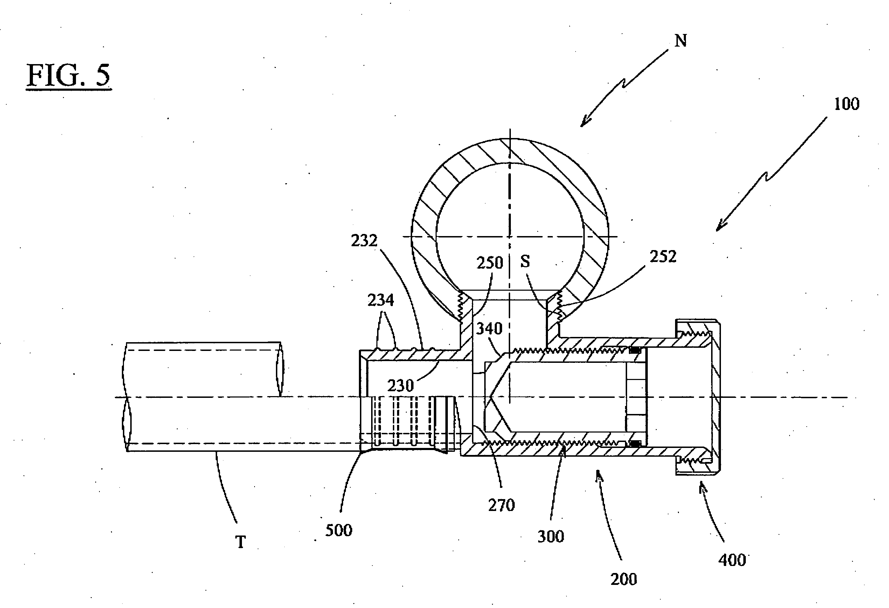

Dans une position intermédiaire montrée à la Fig. 5, l'obturateur 300 est placé légèrement en retrait du siège 270 de manière à ce qu'il puisse régler le débit de fluide susceptible de circuler entre les deux passages 230 et 250, Cette faculté est avantageuse pour équilibrer, sur la nourrice, les débits de fluide caloporteur circulant dans les éléments chauffants et par conséquent pour équilibrer leurs puissances respectives.

A la Fig. 3, un logement 350 creuse intérieurement le corps cylindrique en débouchant uniquement du côté de la gorge 320 pour alléger la construction de l'obturateur 300.

L'obturateur 300 est pourvu d'un moyen d'entraînement 360 pour permettre son déplacement dans le corps 200. Le moyen d'entraînement 360 est constitué à cette Fig. 3 d'une paroi intérieure hexagonale prolongeant le logement intérieur 350 et qui est adaptée à coopérer avec une clé correspondante.

Le bouchon 400 est adapté à fermer le quatrième orifice 270. Il comporte pour cela un taraudage 410 susceptible de coopérer avec un filetage 216 ceinturant le logement cylindrique 210 au niveau de son débouché au travers du premier orifice 220 pour fermer celui-ci lorsque l'obturateur 300 est logé dans le logement 210. Le bouchon 400 monté sur le corps 200 de raccord est notamment présenté à la Fig. 4.

A la Fig. 4, le corps 200 de raccord est raccordé avec une nourrice N ainsi qu'avec un tube T.

A cet effet, le second passage 250 du corps 200 de raccord est pourvu d'un moyen de raccordement 252 avec la nourrice N. Le moyen de raccordement est constitué d'un filetage 252 ceinturant le second passage 250 et qui est adapté à coopérer avec un taraudage constitutif d'un orifice de raccordement secondaire S de la nourrice N, comme cela apparaît à cette Fig. 4.

Pour des raisons de facilité de pose, on préfère utiliser, dans une installation de chauffage hydraulique ou de distribution d'eau sanitaire, des tubes fabriqués en polyéthylène réticulé (P.E.R.). Pour le raccordement d'un tel tube, le premier passage 230 du corps 200 de raccord est ceinturé par une enveloppe cylindrique 232 recouverte de bourrelets annulaires 234 adaptés, en coopération avec une coiffe de sertissage 500, à raccorder de manière étanche l'extrémité du tube T sur l'enveloppe cylindrique 232 du corps 200 de raccord.

Le mode opératoire du raccordement du tube se présente de la manière suivante. On enfile la coiffe 500 sur l'extrémité du tube T, puis on enfile ladite extrémité du tube sur l'enveloppe cylindrique 232 comme le montre la flèche 1. On amène la coiffe 500 sur l'extrémité du tube 2 comme l'indique la flèche 2, puis on sertit ladite coiffe avec une pince de sertissage, non représentée, suivant une direction montrée par la flèche 3.

On remarquera que le raccord de l'invention convient également pour être raccordé sur une nourrice de distribution d'eau sanitaire, chaude ou froide.

Tous les constituants de ce raccord sont avantageusement fabriqués dans une matière plastique.

Le raccord de l'invention intègre un obturateur qui permet de couper ou de régler le débit de fluide susceptible de circuler entre la nourrice et les tubes ou réciproquement.

Il est peu coûteux à fabriquer. Il est aussi simple à monter qu'un raccord conventionnel.

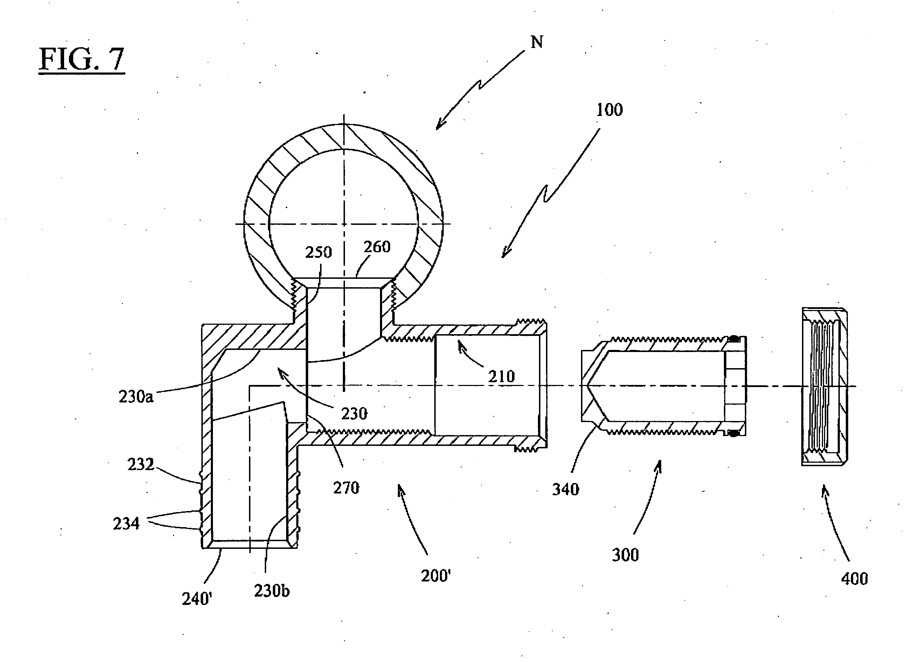

Dans la variante de réalisation du corps 200' de raccord présentée à la Fig. 7, l'axe du second orifice 240' est orienté perpendiculairement à l'axe du logement cylindrique 210 pour pouvoir raccorder un tube dans une direction horizontale en général sur le sol. Pour cela, le premier passage 230 présente une première portion 230a qui prolonge le logement 210. Cette portion 230a est prolongée par une seconde portion 230b, orientée perpendiculairement à la première et qui débouche au travers du second orifice 240'.

## Revendications

1. Raccord (100) destiné à raccorder un tube (T) avec une nourrice (N), le raccord étant du type comprenant un corps (200, 200') de raccord, incluant un premier passage (230) destiné à être raccordé avec le tube (T), un second passage (250) destiné à être raccorde avec la nourrice (N), le corps (200, 200') de raccord incorporant un logement cylindrique (210) à l'intérieur duquel est logé un obturateur (300) apte à obturer un siège (270) interposé entre le premier passage (230) et le second passage (250), **caractérisé en ce que** le premier passage (230) est disposé dans le prolongement du logement cylindrique (210) et **en ce que** le second passage (250) débouche perpendiculairement dans le logement (210), le siège (270) étant constitué par le débouché du premier passage (230) dans le logement cylindrique (210).

2. Raccord (100) selon la revendication 1, **caractérisé en ce que** l'obturateur (300) est pourvu d'une paroi de fermeture (340) du siège (270), l'obturateur (300) étant mobile entre une position où la paroi de fermeture (340) obture le siège (270) et une position de dégagement où elle est distante du siège (270).

3. Raccord (100) selon l'une quelconque des revendications précédentes, **caractérisé en ce que** le logement cylindrique (210) comprend une paroi lisse (212) débouchant à l'extérieur du corps (200, 200') de raccord au travers d'un premier orifice (220) de montage de l'obturateur (300), la paroi lisse (212) étant prolongée dans l'autre direction par un taraudage (214) qui débouche au travers du second passage (250) et **en ce que** l'obturateur (300) est constitué d'un corps cylindrique pourvu localement d'un filetage (310) adapté à coopérer avec le taraudage (214) pour permettre le déplacement de l'obturateur (300) dans le corps (200, 200') suivant un mouvement hélicoïdal, le filetage (310) étant prolongé d'un côté par une gorge (320) susceptible de recevoir un joint d'étanchéité (330) prévu pour coopérer avec la paroi lisse (210) du corps (200, 200') de raccord afin de procurer une étanchéité entre le logement cylindrique (210) et l'obturateur (300), le filetage (310) étant prolongé par son autre côté par la paroi de fermeture (340) adaptée à coopérer avec le siège (270).

4. Raccord (100) selon l'une des revendications 2 ou 3, **caractérisé en ce que** la paroi de fermeture (340) est constituée d'une paroi conique.

5. Raccord (100) selon l'une quelconque des revendications précédentes, **caractérisé en ce que** le premier passage (230) débouche du corps (200, 200') de raccord par un second orifice (240, 240'), le premier passage (230) étant ceinturé par une enveloppe cylindrique (232) recouverte de bourrelets annulaires (234) adaptés, en coopération avec une coiffe de sertissage (500), à raccorder de manière étanché l'extrémité du tube (T) sur l'enveloppe cylindrique (232).

6. Raccord (100) selon l'une quelconque des revendications précédentes, **caractérisé en ce que** le second passage (250) du corps (200, 200') de raccord est pourvu d'un moyen de raccordement (252) avec la nourrice (N).

7. Raccord (100) selon la revendication 6, **caractérisé en ce que** le moyen de raccordement est constitué d'un filetage (252) ceinturant le second passage (250).

8. Raccord (100) selon l'une quelconque des revendications 3 à 7, **caractérisé en ce que** l'obturateur (300) est pourvu d'un moyen d'entraînement (360) pour permettre son déplacement dans le corps (200, 200') de raccord, le moyen d'entraînement étant constitué d'une paroi intérieure hexagonale (360) prolongeant un logement (350) creusant intérieurement le corps cylindrique de l'obturateur (300).

9. Raccord (100) selon l'une quelconque des revendications 3 à 8, **caractérisé en ce que** le raccord (100) comprend un bouchon (400) adapté à fermer le premier orifice (220).

10. Raccord (100) selon l'une quelconque des revendications 5 à 9, **caractérisé en ce que** l'axe du second orifice (240') du corps de raccord (200') est orienté perpendiculairement à l'axe du logement cylindrique (210).
